Europäisches Patentamt

European Patent Office

Office européen des brevets

(19)

(11) Veröffentlichungsnummer: **0 381 243**

**A2**

# (12) EUROPÄISCHE PATENTANMELDUNG

(21) Anmeldenummer: **90102123.8**

(22) Anmeldetag: **02.02.90**

(51) Int. Cl.⁵: **G09B 29/10**

(30) Priorität: **02.02.89 DE 3903123**

(43) Veröffentlichungstag der Anmeldung:
**08.08.90 Patentblatt 90/32**

(84) Benannte Vertragsstaaten:
**AT BE CH DE DK ES FR GB GR IT LI LU NL SE**

(71) Anmelder: **ITC MARTIN SCHMID**
**Eberhard-Frohmayer-Strasse 15**
**D-7122 Besigheim(DE)**

(72) Erfinder: **Schmid, Martin**
**Eberhard-Frohmayer-Strasse 15**
**D-7122 Besigheim(DE)**

(74) Vertreter: **Bauer, Wulf, Dr.**
**Wolfgang-Müller-Strasse 12**
**D-5000 Köln 51 (Marienburg)(DE)**

(54) **Schaukasten mit Strassenkarte und Telefonalage.**

(57) Der Schaukasten für Information und Kommunikation hat eine Straßenkarte, auf der Informationsziele (Hotels, Kfz-Werkstätten, Krankenhäuser, Apotheken, Museen oder dergleichen) aufgezeigt und gegebenenfalls durch selektiv ansteuerbare Leuchtanzeigen kenntlich gemacht sind. Weiterhin ist ein Anschluß (42) für eine Amtsleitung (La, Lb) des öffentlichen Telefonnetzes und eine mit diesem Anschluß (42) verbundene Telefonanlage vorgesehen, die einerseits einen Wählautomaten (20), vorzugsweise mit einem Tastenwahlblock (22), aufweist, in der Telefonnummern der Informationsziele abrufbereit gespeichert sind, und andererseits eine Hör- und Sprecheinheit (Taxitelefon 30) hat. Zwischen Wähleinheit (20) und Hör- und Sprecheinheit (30) ist ein Umschalter (44) eingefügt, mit dessen Schaltzunge der Anschluß (42) verbunden ist, so daß die Amtsleitung (La, Lb) je nach Stellung des Umschalters (44) entweder nur mit dem Wählautomaten (20) oder nur mit der Hör- und Sprecheinheit (30) verbunden ist. Dem Umschalter (44) ist eine Steuereinrichtung (Mikroprozessor 26) zugeordnet ist, die ein Umschalten vom Wählzustand in den Hör- und Sprechzustand erst dann durchführt, wenn ein Wählvorgang vollständig abgeschlossen ist.

FIG. 1

## Schaukasten mit Straßenkarte und Telefonanlage

Die Erfindung bezieht sich auf einen Schaukasten für Information und Kommunikation mit einer Straßenkarte, auf der Informationsziele (Hotels, Kfz-Werkstätten, Krankenhäuser, Apotheken, Museen oder dergleichen) aufgezeigt und gegebenenfalls durch selektiv ansteuerbare Leuchtanzeigen kenntlich gemacht sind, mit einem Anschluß an eine Amtsleitung des öffentlichen Telefonnetzes und mit einer mit diesem Anschluß verbundenen Telefonanlage, die einerseits eine Wähleinheit, vorzugsweise einen Tastenwahlblock, aufweist, in dem Telefonnummern der Informationsziele abrufbereit gespeichert sind, und andererseits eine Hör- und Sprecheinheit hat.

Derartige Schaukästen befinden sich auf mehreren Flugplätzen, beispielsweise auf dem Flughafen München-Riem. Der dort aufgestellte Schaukasten dient der gebührenfreien Reservierung von Hotels, demgemäß sind eine Vielzahl von Hotels auf der Straßenkarte eingetragen. Jedes einzelne Hotel hat eine zugeordnete Leuchtanzeige, die mit einem Tastenwahlblock in Verbindung steht. Weiterhin hat jedes Hotel eine im allgemeinen zweistellige Nummer. Bei Eingabe der Nummer leuchtet einerseits die Leuchtanzeige des zugehörigen Hotels auf der Straßenkarte auf, andererseits wird die abgespeicherte, vollständige Telefonnummer des Hotels aufgerufen und das Hotel angerufen. Nach Herstellen dieser Verbindung kann über die Hör- und Sprecheinheit üblicherweise die Buchung erfolgen.

Ein ähnlicher Schaukasten ist auch bereits aus der deutschen Offenlegungsschrift 34 05 747 vorbekannt, bei ihm wird jedoch im wesentlichen nicht auf das öffentliche Telefonnetz zurückgegriffen, sondern sind spezielle Leitungen zu den einzelnen Hotels vorgesehen. Eine derartige Leitungsführung ist jedoch äußerst aufwendig.

Weiterhin ist ein Schaukasten aus der FR-OS 24 76 886 vorbekannt, auch er hat einen Anschluß an das öffentliche Telefonnetz, jedoch keine Hör- und Sprecheinheit. Der Anschluß an das öffentliche Telefonnetz wird im wesentlichen benutzt, um dem Schaukasten Informationen zuzuleiten.

Bei dem Schaukasten nach der CH-PS 160 601 ist der Tastenwahlblock ausschließlich mit den Leuchtanzeigen an den Informationszielen auf der Straßenkarte verbunden. Um die einzelnen Ziele anzurufen, ist ein Münztelefon vorgesehen. Hier besteht aber der Nachteil, daß der Informationssuchende nicht immer genügend Kleingeld bei sich hat, um das Münztelefon bedienen zu können. Weiterhin muß er zunächst die komplette Rufnummer des gewünschten Informationszieles heraussuchen, eine Kurzwahl, wie bei dem Schaukasten der eingangs genannten Art, steht nicht zur Verfügung.

Bei dem oben beschriebenen Schaukasten der eingangs genannten Art bestehen mehrere Probleme beim praktischen Betrieb: Ist die Telefonanlage als Hauptanschluß des öffentlichen Telefonnetzes geschaltet, so wird immer dann, wenn der Hörer der Telefonanlage abgenommen wird, eine Amtsleitung belegt, unabhängig davon, ob in der zeitlichen Nachfolge die Wähleinheit tatsächlich betätigt und über eine Kurzwahlnummer ein kompletter Ruf herausgesandt wird oder nicht. Dies widerspricht den Zulassungsbestimmungen der Deutschen Bundespost. Besonders gefährlich ist aber, daß nach Herstellen der Amtsleitung durch andere Mittel, beispielsweise periodisches Niederdrücken der Gabel oder über eine Tonfolge (MFV-Wahl) ein Wählvorgang durchgeführt werden kann, ohne die eigentliche Wähleinheit, also den Tastenwahlblock, zu benutzen. Obwohl durch die spezielle Auslegung der Wähleinheit im Grunde erreicht werden soll, daß aus dem gesamten öffentlichen Telefonnetz nur speziell gespeicherte, vorgegebene Nummern abgerufen und angerufen werden können, wird dieses Ziel somit nicht erreicht, vielmehr besteht die Möglichkeit beliebige Teilnehmer des öffentlichen Telefonnetzes zu erreichen. Hierbei können erhebliche Telefonkosten anfallen.

Sofern Schaukästen der hier in Rede stehenden Art in Hallen mit großem öffentlichen Publikumsverkehr, beispielsweise Flughafenhallen, Bahnhofshallen oder dergleichen stehen, ist eine Überwachung im Prinzip möglich. Häufig stehen die Schaukästen aber auch an Ortseingängen, wo sie im allgemeinen nicht überwacht werden. Manipulationen der hier beschriebenen Art können daher nicht beobachtet und somit auch nur schwer verfolgt werden.

Ziel der Erfindung ist es, hier eine Abhilfe zu schaffen. Die Erfindung hat es sich zur Aufgabe gemacht, den Schaukasten der eingangs genannten Art dahingehend zu verbessern, daß trotz des Anschlusses der Telefonanlage an eine Amtsleitung des öffentlichen Telefonnetzes sowohl die Zulassungsbestimmungen der Bundespost eingehalten werden als auch vermieden wird, daß Rufnummern angewählt werden, die nicht zum ausgewählten Kreis gehören, also nicht abrufbereit gespeichert sind.

Ausgehend von dem Schaukasten der eingangs genannten Art wird diese Aufgabe dadurch gelöst, daß zwischen Wähleinheit und Hör- und Sprecheinheit ein Umschalter eingeschaltet ist, mit dessen Schaltzunge der Anschluß verbunden ist, so daß die Amtsleitung je nach Stellung des Schalters entweder nur mit der Wähleinheit oder nur mit der Hör- und Sprecheinheit verbunden ist, und daß dem Schalter eine Steuereinrichtung zugeordnet ist, die ein Umschalten vom Wählzustand in den Hör- und Sprechzustand erst dann durchführt, wenn der Wählvorgang vollständig abgeschlossen und quittiert ist.

Die Erfindung sieht somit eine Trennung zwischen dem Wählvorgang und dem Hören bzw. Sprechen vor. Es findet entweder nur der Wählvorgang oder nur das Hören bzw. Sprechen statt. Eine akustische Eingabe von Wählinformationen ist dadurch nicht möglich. Eine anderweitige Wahl wird dadurch unterbunden, daß nur solche Wählvorgänge zu einem Umschalten in den Hör- und Sprechzustand führen, die in der Wähleinheit vorgegeben sind. Dies wird dadurch erreicht, daß der Übergang in den Hör-und Sprechzustand nicht automatisch nach Abschluß des Wählens erfolgt, sondern erst dann vorgenommen wird, wenn über die Steuereinrichtung der Umschalter entsprechend betätigt wird. Die Steuereinrichtung kann nun entsprechend ausgelegt werden, um der dann, wenn ein nicht vorgesehenes Wählsignal abgegeben wurde, das Umschalten in den Hör- und Sprechzustand nicht durchzuführen. Dies kann zum Beispiel dadurch geschehen, daß die herausgehenden Wählimpulse überwacht und mit den abgespeicherten Rufnummern verglichen werden, wobei nur bei Übereinstimmung der Umschalter durch die Steuereinheit betätigt wird.

Durch die Trennung zwischen Wählzustand und Hör- und Sprechzustand wird somit eine Nutzung des Anschlusses an das amtliche Telefonnetz außerhalb der vorgesehenen Teilnehmer praktisch ausgeschlossen.

Ein der Hör- und Sprecheinheit zugeordneter Gabelschalter ist funktionslos, solange die Hör- und Sprecheinheit nicht über den Umschalter mit der Amtsleitung verbunden ist. Durch Betätigen der Gabel können daher keine Wahlvorgänge erfolgen.

Die Trennung des Wählzustandes vom Hör- und Sprechzustand hat schließlich den Vorteil, daß ein Benutzer während des Wählvorganges keine akustischen Informationen über die Hör- und Sprecheinheit erhält und dadurch den Wählvorgang nicht akustisch mitverfolgen kann. Für den Benutzer bleibt daher weitgehend verborgen, daß ein Wählvorgang im Bereich des öffentlichen Telefonnetzes stattfindet. Dies ist eine von den Zulassungsbehörden erwünschte Maßnahme.

In einer Weiterbildung der Erfindung wird als Hör- und Sprecheinheit eine Einheit mit Freisprecheinrichtung und federbelastet rückstellendem Gabelkontakt, insbesondere ein sogenanntes Taxitelefon (FeAp 86) eingesetzt. Hier besteht der Vorteil, daß aufgrund des eingebauten Lautsprechers und des eingebauten Mikrophons ein separater Hörer, wie er bei einem üblichen Telefon vorgesehen ist, nicht vorhanden ist, also auch nicht mutwillig abgerissen oder zerstört werden kann. Weiterhin ist das Taxitelefon von der Bundespost zugelassen, so daß sich insgesamt das Zulassungsverfahren vereinfacht. Insbesondere entscheidend ist aber, daß der Gabelkontakt nicht, wie bei einem normalen Telefon, durch den Hörer betätigt wird, sondern ein separater Kontakt ist, der betätigt werden muß, solange die Sprechverbindung aufrecht erhalten werden soll. Im Gegensatz zu einem normalen Telefon, bei dem der Gabelkontakt betätigt wird, sobald der Hörer abgenommen wird, ist bei einem Telefon mit Freisprecheinrichtung eine bewußte Betätigung des Gabelkontaktes notwendig. Dies sichert wiederum, daß die Amtsleitung nur solange belegt wird, wie der Gabelkontakt positiv betätigt wird. Bei einem normalen Telefon kann dagegen der Hörer abgenommen und beiseite gelegt werden, ohne daß es für eine weitere Aufrechterhaltung der Verbindung notwendig ist, einen Gabelkontakt positiv zu betätigen.

Weiterhin hat es sich als vorteilhaft erwiesen, in die Zuleitung zur Wähleinheit einen Einschalter einzufügen, der im Ruhezustand geöffnet ist und in der Wähleinheit eine Starttaste vorzusehen, mit der nach Abschluß der Eingabe der Wählinformation der Einschalter geschlossen und der Wählvorgang erst ausgelöst wird. Hierdurch ist separat von den bisher beschriebenen Sicherheitsmaßnahmen die Möglichkeit gegeben, nur solche Wählvorgänge effektiv werden zu lassen, die im System vorgesehen sind. Insbesondere aber wird es durch die separate Starttaste möglich, die Leuchtanzeigen vom eigentlichen Wählvorgang zu entkoppeln. hierzu ist vorgesehen, daß nach Abschluß der Eingabe der Wählinformation die Leuchtanzeige des betreffenden Informationszieles aufleuchtet, ohne daß es einer Betätigung der Starttaste bedarf. Durch die Starttaste wird lediglich der Wählvorgang ausgelöst. Die Leuchtanzeige und der Wählvorgang sind somit entkoppelt, es ist für einen Benutzer möglich, über den Tastenwahlblock zunächst einzelne Informationsziele anzuwählen und anzuschauen, bevor der Benutzer sich entschließt, mit einem konkreten Informationsziel über das öffentliche Telefonnetz in Verbindung zu treten.

Weiterhin wird vorgeschlagen, eine Sprachausgabestufe vorzusehen, in der mehrere, vorgegebene Texte abrufbar abgespeichert sind. Die Hör-und Sprecheinheit ist über Umschalter entweder an diese Sprachausgabestufe oder an den bereits erwähnten, ersten Umschalter angeschlossen. Im Ruhezuständ dient der Lautsprecher der Hör- und Sprecheinheit daher als Ausgabemittel für die Sprachausgabestufe. Sobald der Gabelkontakt (Knebeltaste, Sprechtaste) betätigt wird, erfolgt eine Sprachausgabe über den Lautsprecher. Erst nach Herstellen einer Verbindung mit dem öffentlichen Telefonnetz erfolgt die Umschaltung der Hör- und Sprecheinheit in den Telefonkreislauf.

Als besonders vorteilhaft hat es sich erwiesen, einen Zeitschalter vorzusehen, der nach einer vorgegebenen Zeitspanne, insbesondere nach drei Minuten, ein Gespräch grundsätzlich abschaltet. Dadurch wird einerseits erreicht, daß der Schaukasten nicht für längere Telefonate blockiert wird, andererseits werden die Telefonkosten begrenzt. Letztere hat im allgemeinen der Betreiber des Schaukastens zu bezahlen.

Schließlich wird vorgeschlagen, innerhalb der Telefonanlage eine Einrichtung zur Erfassung des Rufstroms vorzusehen. Sie führt (wie bei einem Anrufbeantworter) dazu, daß am Schaukasten Telefonanrufe von außen entgegengenommen werden können. Ein ankommender Telefonanruf wird über die Einrichtung zur Erfassung des Rufstromes erkannt und durch geeignete Anzeigemittel, beispielsweise durch eine Leuchtanzeige, durch eine Information auf einer Anzeigeeinheit, z. B. LCD-Anzeigeeinheit (Display) oder akustisch ausgegeben. Wird während des Anrufs der Gabelkontakt der Hör- und Sprecheinheit betätigt, so ist die Verbindung hergestellt und kann über die Hör- und Sprecheinheit mit dem anrufenden Teilnehmer gesprochen werden.

Weitere Merkmale und Vorteile der Erfindung ergeben sich aus den weiteren Ansprüchen sowie der nun folgenden Beschreibung eines nicht einschränkend zu verstehenden Ausführungsbeispiels, das unter Bezugnahme auf die Zeichnung im folgenden näher erläutert wird. In der Zeichnung zeigen:

Fig. 1 eine schematische Darstellung wesentlicher Teile einer Telefonanlage eines Schaukastens, gezeigt ist die Ruheposition (Zustand der Nichtbenutzung),

Fig. 2 eine Darstellung wie Fig. 1, jedoch im Wählzustand und

Fig. 3 eine Darstellung wie Fig. 1, jedoch im Hör- und Sprechzustand.

Die gezeigte Telefonanlage dient in der Öffentlichkeit denjenigen Personen zur telefonischen Kontaktaufnahme, die anhand einer hier nicht näher dargestellten Straßenkarte Informationsziele, wie z. B. Hotels, Kraftfahrzeugwerkstätten, Krankenhäuser, Apotheken, Museen oder dergleichen, herausgefunden haben, mit denen sie telefonisch in Verbindung treten möchten. Gezeigt ist ein Wählautomat 20 mit einem Tastenwahlblock 22, der eine Starttaste 24 umfaßt. Im Wählautomat befindet sich ein Mikroprozessor 26, in dem die Rufnummern aller Informationsziele, die (ausschließlich) erreichbar sein sollen, abgespeichert und über Kurzwahlnummern abrufbar vorliegen. Weiterhin steuert der Mikroprozessor über die gestrichelt dargestellten Leitungen, auf die hier nicht näher eingegangen wird, die einzelnen Schaltzustände der Telefonanlage.

Mit dem Bezugszeichen 30 ist ein sogenanntes Taxitelefon bezeichnet, es handelt sich hierbei um ein postalisch zugelassenes Fernsprechgerät, das ansich nur für kommenden Betrieb an Haupt- und Nebenanschlüssen ausgelegt ist. Es hat keine Wähleinrichtung. Auf seiner Frontseite befinden sich einerseits Auslaßöffnungen eines nicht näher dargestellten Lautsprechers 32, eine Sprechtaste 34 und ein Mikrophon 36, das ebenfalls geschützt angeordnet ist. Schließlich zeigen die Figuren eine Sprachausgabestufe 40 in der abrufbar mehrere Standardtexte abgespeichert (vorzugsweise digital) sind.

Im Wählautomat 20 ist auch ein Display 28 vorgesehen, es ist als LCD-Anzeigeeinheit ausgeführt und dem Mikroprozessor 28 zugeordnet. An ihm erscheinen Hinweise für die Bedienung, die nicht über die Sprachausgabestufe 50 erfolgen können oder sollen.

Mit La und Lb ist eine postalische Amtsleitung bezeichnet. Sie ist im Bereich eines Anschlusses, der hier gestrichelt durch eine Linie 42 symbolisiert ist, mit der Telefonanlage verbunden. Beide Amtsleitungen sind jeweils mit der Schaltzunge eines Umschalters 44 verbunden und können wahlweise entweder auf eine Leitung 46, die sie mit dem Wählautomaten 20 verbindet, oder eine Leitung 48, die der Verbindung mit dem Taxitelefon 30 dient, geschaltet werden. Eine direkte Verbindung von Wählautomat 20 und Taxitelefon 30 ist nicht möglich. In die Leitung 46 ist ein Einschalter 50 eingefügt, er ist mit der Starttaste 24 über den Mikroprozessor 26 verbunden und wird, wie alle anderen Schalter, vom Mikroprozessor 26 gesteuert. In den Anschlußleitungen 52, 54 des Taxitelefons 30 sind ebenfalls zweite Umschalter eingefügt, die genannten Leitungen 52, 54 sind mit der Schaltzunge verbunden. Die Schaltkontakte sind entweder an die Leitung 48 oder an eine Leitung 58 angeschlossen, welche zur Sprachausgabestufe 40 führt.

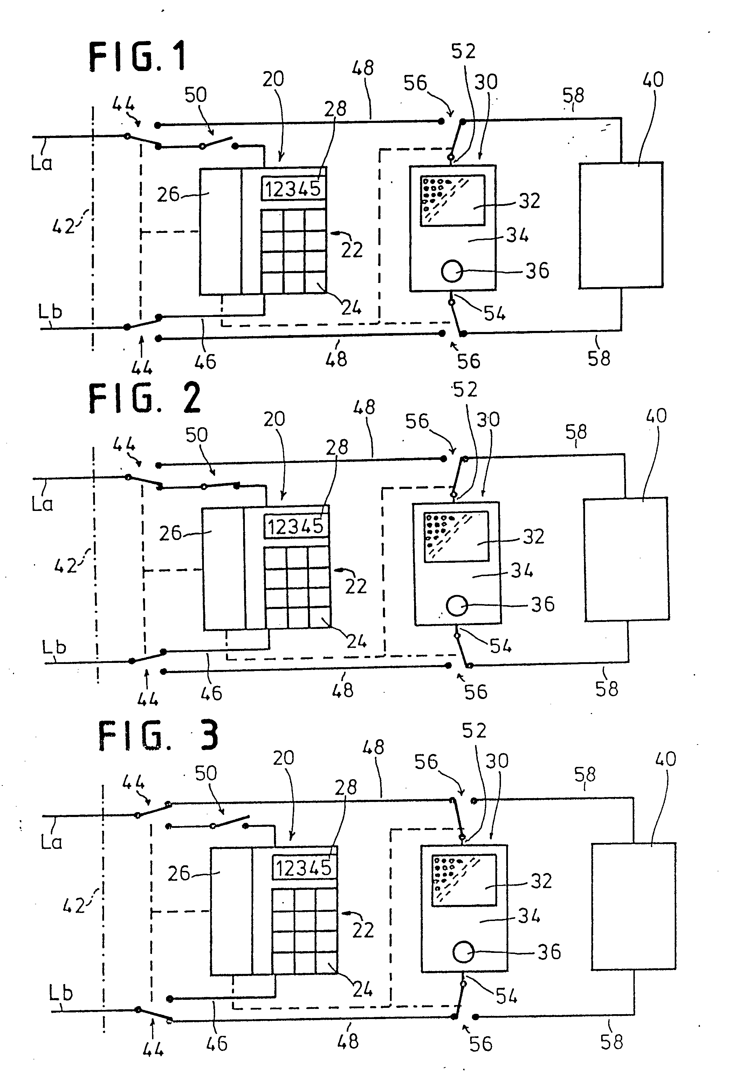

In der in Fig. 1 gezeigten Ruhestellung ist das Taxitelefon 30 wie eine Nebenstelle zu betrachten. Der Umschalter 44 ist so geschaltet, daß eine Verbindung zum Wählautomaten 20 möglich ist, jedoch ist diese Verbindung noch durch den Einschalter 50 unterbrochen. Dadurch ist gewährleistet, daß beim Niederdrücken der Sprechtaste 34 am Taxitelefon 30 kein Amt belegt werden kann. Ferner kann das Taxitelefon 30 in dieser Konfiguration zunächst für akustische Hinweise benutzt werden, dementsprechend ist auch der zweite Umschalter 56 in der Ruheposition mit den Leitungen 58 damit mit der Sprachausgabestufe 40 verbunden.

In Ruhestellung, also bei Anrufbereitschaft, bringt das Taxitelefon 30 beim Niederdrücken der Sprechtaste 34 ausgelöst über die Sprachausgabestufe 40 den Hinweis "Bitte beachten Sie die Hinweise". Damit sind die Hinweise auf der Bedienungsanleitung (nicht dargestellt) und dem Display 28 gemeint.

Tastet nun der Teilnehmer eine zumeist zweistellige Kurzwahlnummer ein, so wird er über das Display 28 oder durch die Sprachausgabestufe 40 darauf hingewiesen, daß der Standort des gewählten Informationsziels als Leuchtpunkt in der Straßenkarte angezeigt wird und daß mit dem entsprechenden Teilnehmer besprochen werden kann, wenn die Starttaste 24 betätigt wird.

Nach Betätigung der Starttaste 24 wird darauf hingewiesen, daß die Sprechtaste 34 zu betätigen ist und es erfolgt akustisch der Hinweis "Die Verbindung wird automatisch hergestellt".

Erst nach Abschluß des Wählvorgangs und nach Betätigen der Starttaste 24 wird über den Mikroprozessor 26 der Einschalter 50 geschlossen, so daß nunmehr (erst jetzt) eine Verbindung mit der Amtsleitung hergestellt ist. Der Mikroprozessor 26 überwacht, ob die Sprechtaste 34 gedrückt ist. Bei kurzem Loslassen erfolgt eine Aufforderung am Display, die Sprechtaste 34 wieder zu betätigen. Erfolgt dies nicht, wird die Verbindung abgebrochen. In jedem Fall wird die Verbindung nach drei Minuten durch eine (nicht dargestellte) Zeitstufe unterbrochen und das Gerät in den Ausgangszustand gemäß Fig. 1 zurückgesetzt. Die 3-Minuten-Zeit wird im Display 28 durch Balken oder andere Darstellung angezeigt.

Nach Schließen des Einschalters 50 ist der Wählzustand erreicht, wie ihn Fig. 2 zeigt. Sobald die Verbindung zum gewünschten Teilnehmer durchgeschaltet ist, was entweder anhand des Ruftons, anhand des ersten Zählimpulses oder an entsprechenden Informationen erkannt wird, schaltet der Mikroprozessor 26 die Umschalter 44 um, gleichzeitig werden die zweiten Umschalter 56 betätigt, so daß anschließend das Taxitelefon 30 unmittelbar mit der Amtsleitung La, Lb verbunden ist. In diesem Zustand bleibt die Verbindung nur solange aufrecht erhalten, wie die Sprechtaste 34 gedrückt ist oder solange die vorgegebene Zeit, also insbesondere drei Minuten, nicht überschritten sind. Wird jedoch die Sprechtaste 34 endgültig losgelassen oder ist die vorgegebene Sprechzeit abgelaufen, so stellt der Mikroprozessor 26 das Gerät automatisch wieder in den Ausgangszustand gemäß Fig. 1.

## Ansprüche

1. Schaukasten für Information und Kommunikation,
- mit einer Straßenkarte, auf der Informationsziele (Hotels, Kfz-Werkstätten, Krankenhäuser, Apotheken, Museen oder dergleichen) aufgezeigt und gegebenenfalls durch selektiv ansteuerbare Leuchtanzeigen kenntlich gemacht sind,
- mit einem Anschluß (42) für eine Antsleitung (La, Lb) des öffentlichen Telefonnetzes und
- mit einer mit diesem Anschluß (42) verbundenen Telefonanlage, die einerseits einen Wählautomaten (20), vorzugsweise mit einem Tastenwahlblock (22), aufweist, in der Telefonnummern der Informationsziele abrufbereit gespeichert sind, und andererseits eine Hör- und Sprecheinheit (Taxitelefon 30) hat,
dadurch gekennzeichnet, daß zwischen Wählautomat (20) und Hör- und Sprecheinheit (30) ein Umschalter (44) eingefügt ist, mit dessen Schaltzunge der Anschluß (42) verbunden ist, so daß die Amtsleitung (La, Lb) je nach Stellung des Umschalters (44) entweder nur mit dem Wählautomaten (20) oder nur mit der Hör- und Sprecheinheit (30) verbunden ist, und daß dem Umschalter (44) eine Steuereinrichtung (Mikroprozessor 26) zugeordnet ist, die ein Umschalten vom Wählzustand in den Hör- und Sprechzustand erst dann durchführt, wenn ein Wählvorgang vollständig abgeschlossen ist.

2. Schaukasten nach Anspruch 1, dadurch gekennzeichnet, daß als Hör-und Sprecheinheit ein Taxitelefon (FeAp 86) eingesetzt ist.

3. Schaukasten nach Anspruch 1 oder 2, dadurch gekennzeichnet, daß in die Zuleitung (46) des Wählautomaten (20) ein Einschalter (50) eingefügt ist, der im Ruhezustand geöffnet ist, und daß im Wählautomaten eine Starttaste (24) vorgesehen ist, mit der nach Abschluß der Eingabe der Wählinformation der Einschalter (50) geschlossen und der Wählvorgang durchgeführt wird.

4. Schaukasten nach einem der Ansprüche 1 bis 3, dadurch gekennzeichnet, daß zusätzlich eine Sprachausgabestufe (40) vorgesehen ist und im Ruhezustand mit der Hör- und Sprecheinheit (30) verbunden ist.

5. Schaukasten nach einem der Ansprüche 1 bis 4, dadurch gekennzeichnet, daß ein zweiter Umschalter (56) vorgesehen ist, der die Hör-und Sprecheinheit (30) entweder mit der Sprachausgabestufe (40) oder über den Umschalter (44) mit dem Anschluß (42) verbindet.

6. Schaukasten nach einem der Ansprüche 1 bis 5, dadurch gekennzeichnet, daß der Wählautomat (20) eine Einrichtung zum Erfassen des Rufstroms umfaßt.

FIG. 1

FIG. 2

FIG. 3